# EUROPÄISCHE PATENTANMELDUNG

(11) **EP 2 580 958 A1**
(43) Veröffentlichungstag der Anmeldung: **17.04.2013**
(21) Anmeldenummer: 12006842.4
(22) Anmeldetag: 01.10.2012
(51) Int. Cl.: A01K 61/00

(54) **Einrichtung für eine Zuchtanlage von Tieren in einem Gewässer**

(30) Priorität: 10.10.2011 CH 16582011
(71) Anmelder: Geobrugg AG, 8590 Romanshorn (CH)
(72) Erfinder: Brunn, Mario, CH-9552 Bronschhofen (CH)
(74) Vertreter: Luchs, Willi

(57) **Zusammenfassung**

Eine Einrichtung für eine Zuchtanlage von Tieren in einem Gewässer, ist insbesondere als Schutz beim Züchten von Muscheln, Meeresfrüchten oder ähnlichem vorgesehen. Es ist hierbei eine im Gewässer befindliche Schutzhülle (1) entweder den mindestens einen Zuchtstrang (14) umschliessend oder die Muscheln oder dergleichen aufnehmend angeordnet. Die Schutzhülle (1) ist vorteilhaft aus einem metallischen Drahtgeflecht (2) mit zumindest teilweiser Anti-Fouling-Eigenschaften hergestellt. Damit sind die Muscheln etc. vor dem Zugriff von Raubtieren, wie Enten, Vögeln, bestimmen Fischarten und schwimmenden Säugetieren geschützt.

## Beschreibung

Die Erfindung betrifft eine Einrichtung für eine Zuchtanlage von Tieren in einem Gewässer.

Einrichtungen dieser Art bestehen bekanntlich aus nebeneinander angeordneten Zuchtsträngen in Gestalt von Seilen, Pfählen oder flössenartigen Vorrichtungen, an denen die Muscheln während ihrer Wachstumsphase heranwachsen. In dieser Entwicklungsphase sind sie ungeschützt dem Zugriff von Raubtieren, wie Enten, Vögeln, bestimmen Fischarten und schwimmenden Säugetieren ausgesetzt. Der Schutz vor Raubtieren, aber auch von Personen-Diebstählen, bei konstant guter Durchflutung ist daher im Muschelzuchtbetrieb ein überaus wichtiges Anliegen.

Sie können aber auch in Kunststoffkörben gezüchtet werden, die jedoch sehr schnell von Algen und dergleichen bewachsen werden und damit die lebenswichtige Zufuhr von frischem, sauerstoffreichen Wasser unterbunden oder zumindest stark eingeschränkt ist.

Ausserdem besteht die Gefahr, dass sich die insbesondere an Tauen, Seilen oder ähnlichem heranwachsenden Muscheln durch heftige Bewegungen, wie zum Beispiel starker Wellengang, oder durch Unachtsamkeit während der Aufzuchtspflege loslösen können und damit verloren gehen.

Der Erfindung liegt die Aufgabe zugrunde, diese Nachteile zu beheben und eine Einrichtung für Zuchtstränge von Muschelzuchtanlagen zu schaffen, bei der ein Verlust von heranwachsenden Muscheln oder dergleichen stark reduziert und aber dennoch die ungehinderte Wasserzirkulation in der Muschelzuchtanlage dauerhaft ermöglicht wird und das natürliche Wachstum der Muschelpopulation gewährleistet ist.

Diese Aufgabe wird erfindungsgemäss dadurch gelöst, dass die Einrichtung eine im Gewässer befindliche Schutzhülle aufweist, welche entweder den mindestens einen Zuchtstrang umschliesst oder in welcher die Muscheln oder dergleichen verteilt angeordnet sind.

Die erfindungsgemässe Schutzhülle ist leicht flexibel, aber insgesamt formstabil ausgebildet und bietet dadurch einen sicheren Schutz vor angreifenden Raubtieren. Sie kann auch zuverlässig die Fouling-Bildung unterbinden. Ihre Maschen bleiben dauerhaft im Wasser weitgehend schmutzfrei, und das Wasser kann stets ungehindert durch die Zuchtstränge der Anlage zirkulieren. Durch die Formstabilität und die erfindungsgemässe Dimensionierung der Schutzhülle wird ausserdem sichergestellt, dass zwischen ihr und der Muschelpopulation keine den Muschelbestand schädigende Berührung möglich ist.

Es ist für die Formstabilität der Schutzhülle vorteilhaft, wenn das Drahtgeflecht aus hochfestem Stahldraht, beispielsweise mit einer Nennfestigkeit von mindestens 1'000 N/mm², gefertigt ist und diese mit einer Anti-Fouling-Beschichtung, vorzugsweise einer Kupfer- oder Kupferlegierungsschicht, versehen ist.

Die Erfindung sieht ferner vor, dass das Drahtgeflecht mit einer in Längsrichtung des Zuchtstrangs verlaufenden Schliessnaht versehen ist. Dies erleichtert die Herstellung und auch die Montage der Schutzhülle. Sie ermöglicht ausserdem den Zugang zum Innenraum der Schutzhülle, etwa bei Inspektionen, Reparaturen oder ähnlichen Arbeiten. Die Schliessnaht kann als durchgehende Naht mit einem durch die Randmaschen des Drahtgeflechts geführten Verbindungsseil hergestellt werden.

Die Schutzhülle kann auch erfindungsgemäss mit Zwischenböden versehen sein, die den Innenraum in korbähnliche Abteile unterteilen und ihn, stirnseitig plaziert, abschliessen können. Ein solcher Aufbau mit flössenartigen Böden ist für die Zucht von Muscheln, Weichtieren bzw. Meeresfrüchten, die auf dem Boden wachsen, sehr geeignet. Die Zwischenböden werden zweckmässigerweise auch aus Drahtgeflecht mit Anti-Fouling-Eigenschaften hergestellt.

Zum Fixieren der Schutzhülle in der gewünschten Position um den Zuchtstrang wird das Drahtgeflecht erfindungsgemäss mit sich in Längsrichtung des Zuchtstrangs erstreckenden Halteseilen festgehalten, die zweckmässigerweise durch am Drahtgeflecht befestigte Führungsrohre durchgeführt sind. Dadurch kann sich die Schutzhülle relativ zum Zuchtstrang leicht bewegen, ohne dass die Muschelpopulation zu Schaden kommt.

Bei Muschelzuchtanlagen, deren Zuchtstränge durch den Boden verankerte Zuchtpfähle gebildet sind, sieht die Erfindung vor, dass die Schutzhülle direkt am Pfahl fixiert ist.

Die Erfindung wird nachfolgend anhand mehrerer Ausführungsbeispiele unter Bezugnahme auf die Zeichnung näher erläutert. Es zeigen:
- Fig. 1: eine erfindungsgemässe Schutzhülle mit kreisrundem Querschnitt, in der Seitenansicht dargestellt,
- Fig. 2: die Schutzhülle aus Fig. 1, im Querschnitt und vergrössert dargestellt,
- Fig. 3: die Schliessnaht der Schutzhülle aus Fig. 1 und 2,
- Fig. 4: eine erfindungsgemässe Schutzhülle mit quadratischem Querschnitt, in der Seitenansicht dargestellt,
- Fig. 5: die Schutzhülle aus Fig. 4, im Querschnitt und vergrössert dargestellt,
- Fig. 6: den Randbereich der Schutzhülle aus Fig. 4 und 5,
- Fig. 7: die Schliessnaht der Schutzhülle aus Fig. 4 und 5,
- Fig. 8: eine erfindungsgemässe Schutzhülle für einen als Pfahl ausgebildeten Zuchtstrang, in der Seitenansicht dargestellt, und
- Fig. 9: die Schutzhülle aus Fig. 8 in der Draufsicht.

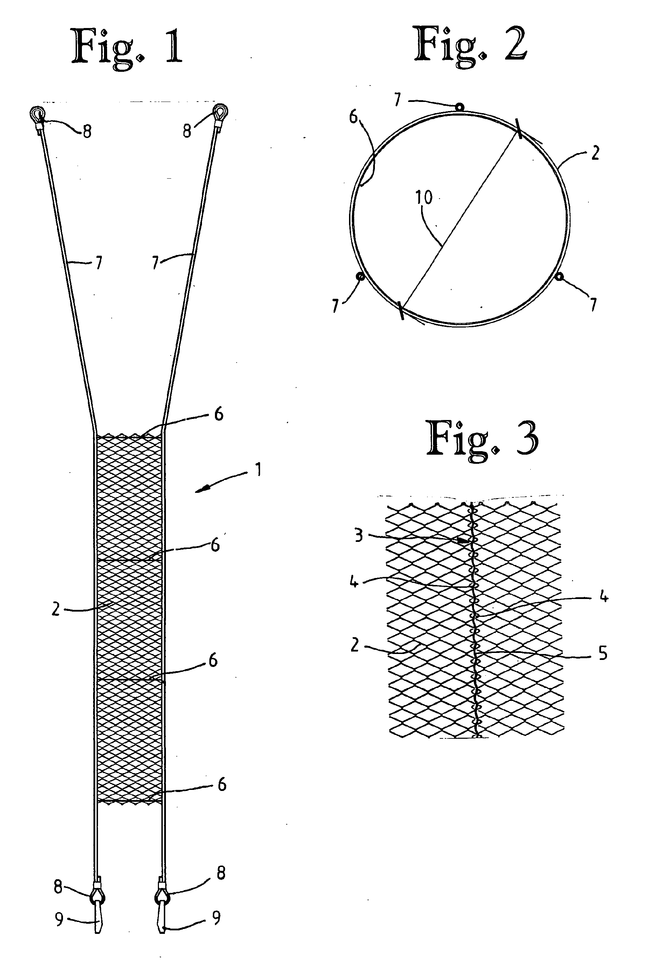

Die in Fig. 1 bis Fig. 3 gezeigte Einrichtung für eine Zuchtanlage in einem Gewässer zum Züchten von Muscheln oder anderen Weichtieren, weist eine Schutzhülle 1 auf, die aus einem einstückigen Drahtgeflecht 2 aus hochfestem Stahldraht besteht, welches zu einem Zylinder mit kreisrundem Querschnitt gebogen ist und mit einer in Längsrichtung durchgehenden Schliessnaht 3 versehen ist. Diese wird mit einem durch die Randmaschen 4 des Geflechts geführten Verbindungsteil 5 hergestellt. Um die Schutzhülle zu öffnen, wird das Verbindungsteil 5 abgezogen. Damit erhält der Zuchtstrang einen seitlichen Zugang.

Die Schutzhülle 1 weist mehrere in Längsrichtung verteilt angeordnete Verstärkungsringe 6 auf, die punktuell mit Ringen, Klemmen und ähnlichen Verbindungsmitteln am Drahtgeflecht 2 festgeklemmt sind.

Die Schutzhülle 1 weist ferner drei umfangsmässig verteil angeordnete Halteseile 7 auf, deren Enden mit Ösen 8 zum Befestigen von Ballastkörpern 9 bzw. zum Aufhängen de Schutzhülle an einem ortsfesten oder schwimmenden Tragkörper versehen sind. Die Haltseile 7 sind mit dem Drahtgeflecht 2 fest verbunden und tragen damit dazu bei, seine Formstabilität sicherzustellen. Sie ermöglichen ausserdem im Betrieb, dass die Schutzhülle sich leicht relativ zum Zuchtstrang bewegen kann, ohne das Wachstum der Muschelpopulation zu beeinträchtigen.

Die Schutzhülle 1 ist so befestigt, dass der Zuchtstrang etwa in ihrer Mittelachse plaziert ist. Dadurch ist der Abstand des Zuchtstrangs zum Drahtgeflecht 2 in allen Richtungen gleichmässig. Der Durchmesser 10 des Drahtgeflechts ist so bemessen, dass der Abstand zwischen ihm und der Muschelpopulation das ungehinderte Wachstum der Muscheln sicherstellt. Andererseits ist dieser Abstand so gewählt, dass die Schutzhülle um den Zuchtstrang möglichst eng und damit platz- und gewichtssparend ausgelegt ist. Der Durchmesser kann beispielsweise 50 bis 100 cm betragen.

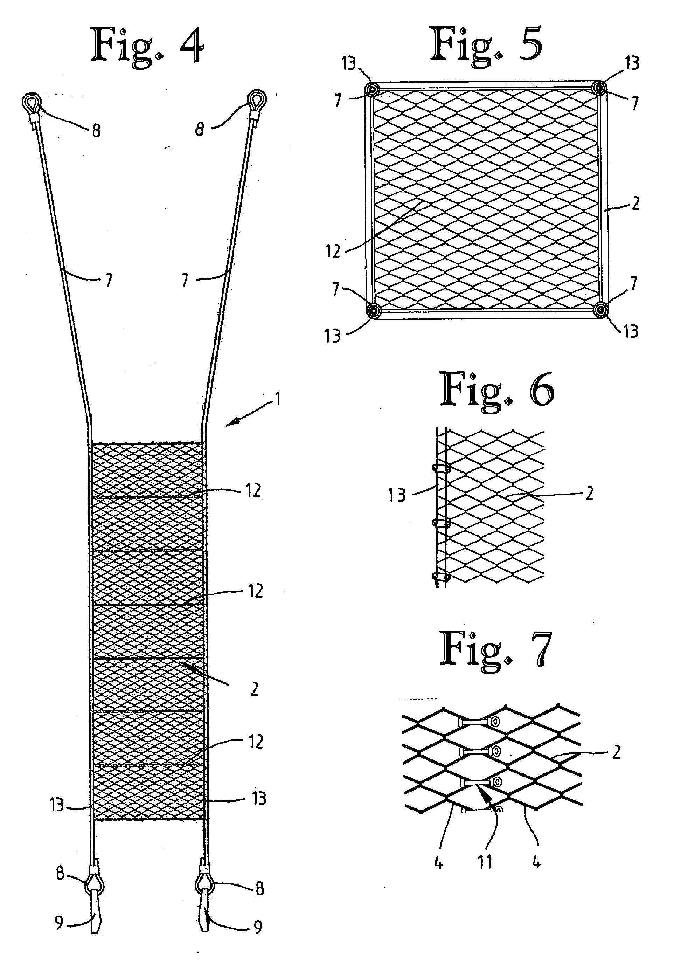

Eine Einrichtung mit einer Schutzhülle 1 gemäss Fig. 4 bis Fig. 7 unterscheidet sich von der nach Fig. 1 im Wesentlichen dadurch, dass sie einen quadratischen Querschnitt aufweist, und dass, wie in Fig. 7 ersichtlich, ihre Schliessnacht 3 mit den Randmaschen 4 des Geflechts 2 paarweise miteinander verbindenden Schäkeln 11 hergestellt ist.

Die Schutzhülle 1 ist ausserdem mit mehreren in Längsrichtung verteilt angeordneten Zwischenböden 12 ausgestattet, die den Innenraum in korbähnliche Abteile 21 unterteilen. Die Zwischenböden 12 sind aus demselben Drahtgeflecht wie der Mantel 2 der Schutzhülle hergestellt. Durch ihre flössenartige Gestalt sind sie für die Zucht von Muschelarten, die auf dem Boden wachsen, gut geeignet. Die beidseitig stirnseitig angebrachten Zwischenböden dienen dazu, den Innenraum zum besseren Schutz der Muscheln abzuschliessen. Durch Entfernen der Schäkel 11 kann ein Zugang zu den einzelnen Zwischenböden 12 hergestellt werden.

Die Schutzhülle 1 ist querschnittsmässig so bemessen, dass die Fläche und der Zwischenabstand der Zwischenböden 12 für das ungehinderte Wachstum der Muschelpopulation ausreichend sind.

Die Verstärkungsringe 6 sind auch hier entsprechend dem Hüllenquerschnitt quadratisch ausgebildet. An ihren Ecken sind Führungsrohre 13 angeordnet, in denen die Halteseile 7 geführt sind. Wie aus Fig. 6 ersichtlich, sind sie am Drahtgeflecht 2 mit Ringen, Ringen, Klemmen oder ähnlichen Befestigungsmitteln festgeklemmt.

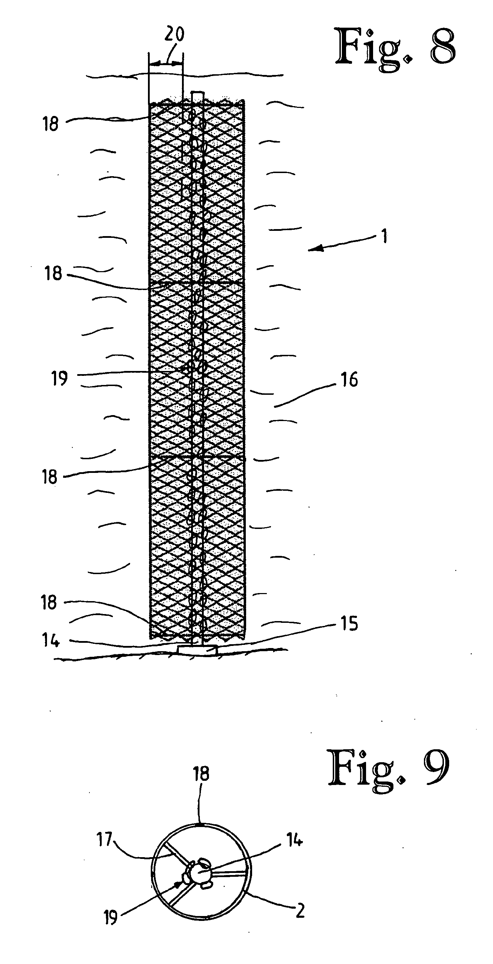

Die Schutzhülle nach Fig. 8 bzw. Fig. 9 unterscheidet sich ihrerseits von der nach Fig. 1 dadurch, dass sie insbesondere für durch Pfähle gebildete Zuchtstränge geeignet ist. Fig. 8 zeigt einen Zuchtpfahl 14, der im Boden 15 verankert und im zirkulierenden Wasser 16 getaucht ist. Das Drahtgeflecht 2 wird hier direkt am Zuchtpfahl mittels dreiarmiger Radialhalter 17 festgehalten, die vorzugsweise mit am Drahtgeflecht 2 fixierten Tragringen 18 versehen ist.

Der Querschnitt der Schutzhülle 1 ist so dimensioniert, dass zwischen ihr und der Muschelpopulation 19 ein Zwischenabstand 20 vorhanden ist. Er bewirkt, dass die Muscheln entlang des Zuchtpfahls ohne Berührung mit der Schutzhülle heranwachsen.

Es ist im Rahmen der Erfindung ohne weiteres möglich, einzelne Details der beschriebenen Schutzhüllen miteinander so zu kombinieren, dass die Konstruktion am besten den jeweiligen Einsatzbedingungen Rechnung trägt. So können auch beispielsweise die Schutzhüllen nach Fig. 1 bis Fig. 8 mit Zwischenböden versehen sein.

Mit der Erfindung kann überdies vorgesehen sein, für das Drahtgeflecht 2 die jeweils günstige Ausführung der Schliessnaht 5 vorzusehen, je nachdem, ob eine durchgehende oder eine lokal begrenzt aufschliessbare Öffnung der Schutzhülle gewünscht wird. Diese kann auch selbstverständlich andere als kreisrunde und quadratische Querschnitte aufweisen. Sie kann auch mit das Handling erleichternden Öffnungselementen wie Türen u. dgl. sowie mit Geräten für die vorzugsweise automatische Reinigung des Drahtgeflechts versehen sein.

Für die Fertigung des Drahtgeflechts werden rostfreie und/oder korrosionsbeständige bzw. beschichtete Stahldrähte mit Nennfestigkeiten von ca. 1'000 N/mm² bis 3'200 N/mm² bevorzugt. Daraus resultiert eine Gewichtsreduzierung und eine längere Lebensdauer des Geflechts.

Ebenfalls könnten Drahtnetzkonstruktionen mit normalen Festigkeiten (z.B. zwischen 350 - 1'000 N/mm²) der einzelnen Drähte oder Litzen verwendet werden. Die Drähte oder dergleichen der Schutzhülle könnten auch mit einer Oberflächenstruktur derart beschaffen werden, dass eine Anti-Fouling Wirkung erzielt werden kann. Sie könnten auch aus Kupfer, Kupfer-Nickel- oder anderen Kupferlegierungen oder aus Kombinationen davon bestehen, womit das bezweckte Anti-Fouling sichergestellt ist.

Vorteilhaft sind auch die Verstärkungsringe 6, Halteseile 7, Ösen 8, Führungsrohre 13, Zuchtpfähle 14 etc. mit Anti-Fouling-Eigenschaften hergestellt.

Die Schutzhüllen könnten auch nur teilweise aus einem Material mit Anti-Fouling-Eigenschaften ausgebildet sein, um Herstellungskosten zu reduzieren oder aus anderen Gründen.

Die Muscheln, Meeresfrüchte oder ähnliche Weichtiere könnten auch direkt in der Schutzhülle als Käfig angeordnet sein und auf der inneren Seite derselben liegen bzw. gehalten sein. Die Schutzhülle könnte hiefür zweckmässigerweise auch unter Wasser horizontal ausgerichtet sein und zumindest teilweise aus dem Wasser ragen. Je nach Verankerungs- und Konstruktionsart können an der Schutzhülle punktuell zusätzliche Schwimmkörper angebracht werden. Die Schutzhülle könnte auch mit einem flächigen ebenen unteren Boden versehen sein. Dieser untere flächige Boden könnte auch durch zwei voneinander beabstandete Geflechte oder einer künstlichen Bodenschicht gebildet sein, bei dem dann die Muscheln auf der inneren Seite aufliegen würden und so besser gegen Raubtiere etc. geschützt wären.

Die Schutzhülle könnte ferner schwimmend aufgehängt und vorzugsweise nach unten verankert sein.

In der Regel erfolgt der Einbau der Schutzhülle in einer Lage. Je nach Zuchtanwendung und örtlichen Verhältnissen sowie der lokalen Raubtiergefahr könnten aber auch mehrlagige Konstruktionen, teilweise mit gewissen Abständen zueinander verwendet werden, um den Schutz zu erhöhen.

## Patentansprüche

1. Einrichtung für eine Zuchtanlage von Tieren in einem Gewässer, **dadurch gekennzeichnet, dass**
die Einrichtung für einen Schutz von Muscheln, Meeresfrüchten oder ähnlichem vorgesehen ist, bei welcher jeweils mindestens ein im Gewässer befindlicher Zuchtstrang (14) mit sich daran haltenden, mit darauf abgelegten oder daran befestigten Muscheln, Meeresfrüchten oder ähnlichem von einer Schutzhülle (1) umschlossen ist, oder dass die Muscheln oder dergleichen in der Schutzhülle (1) verteilt angeordnet sind.

2. Einrichtung nach Anspruch 1,**dadurch gekennzeichnet, dass**
die Schutzhülle (1) aus einem metallischen Drahtgeflecht (2) mit zumindest teilweise Anti-Fouling-Eigenschaften hergestellt ist, wobei die Maschen des Drahtgeflechtes mit einer solch geringen Maschenweite versehen sind, dass keine ausserhalb der Schutzhülle im Gewässer befindlichen Tiere, beispielsweise Fische, oder Personen ins Innere der Schutzhülle gelangen können.

3. Einrichtung nach Anspruch 1 oder 2, **dadurch gekennzeichnet, dass**
die Schutzhülle (1) mit mehreren in Längsrichtung des Zuchtstrangs (14) verteilt angeordneten Zwischenböden (12) versehen ist, die den Innenraum in korbähnliche Abteile (21) unterteilen.

4. Einrichtung nach Anspruch 3, **dadurch gekennzeichnet, dass**
die Zwischenböden (12) auch aus einem Drahtgeflecht oder aus Kunststoff mit oder ohne Anti-Fouling-Eigenschaften hergestellt sind.

5. Einrichtung nach einem der Ansprüche 1 bis 4, **dadurch gekennzeichnet, dass**
das Drahtgeflecht (2) mit einer in Längsrichtung des Zuchtstrangs (14) verlaufenden Schliessnaht (3) versehen ist.

6. Einrichtung nach Anspruch 5, **dadurch gekennzeichnet, dass**
die Schliessnaht (3) mit einem durch die Randmaschen (4) des Drahtgeflechts geführten Verbindungsteil (5) hergestellt ist.

7. Einrichtung nach einem der Ansprüche 1 bis 6, **dadurch gekennzeichnet, dass**
das Drahtgeflecht (2) mit in Längsrichtung des Zuchtstrangs (14) verteilt angeordneten und vorzugsweise kreisrunden, ovalen, polygonalen oder quadratischen Verstärkungselementen (6) versehen ist.

8. Einrichtung nach einem der Ansprüche 1 bis 7, **dadurch gekennzeichnet, dass**
das Drahtgeflecht (2) mit sich in Längsrichtung des Zuchtstrangs (14) erstreckenden Halteseilen (7) versehen ist.

9. Einrichtung nach Anspruch 8, **dadurch gekennzeichnet, dass**
die Halteseile (7) am unteren Ende mit Ballastkörpern (9) belastet sind und am oberen Ende mit Verbindungsmitteln, wie Ösen (8), an ortsfesten oder schwimmenden Tragelementen befestigbar sind.

10. Einrichtung nach Anspruch 8 und 9, **dadurch gekennzeichnet, dass**
die Halteseile (7) durch am Drahtgeflecht (2) befestigte Führungsrohre (13) durchgeführt sind.

11. Einrichtung nach einem der Ansprüche 1 bis 10, **dadurch gekennzeichnet, dass**
die jeweiligen Zuchtstränge durch im Boden verankerte Zuchtpfähle (14) gebildet sind, und die Schutzhülle (1) an wenigstens einem Zuchtpfahl (14) gehalten ist.

12. Einrichtung nach einem der Ansprüche 1 bis 11, **dadurch gekennzeichnet, dass**
das Drahtgeflecht (2) aus hochfestem Stahldraht gefertigt ist und mit einer Anti-Fouling-Beschichtung bzw. Anti-Fouling-Oberflächenbehandlung versehen ist.

13. Einrichtung nach Anspruch 12, **dadurch gekennzeichnet, dass**
die Anti-Fouling-Beschichtung durch eine Kupfer- oder Kupferlegierungsschicht auf dem Stahldraht gebildet ist.

14. Einrichtung nach einem der Ansprüche 1 bis 11, **dadurch gekennzeichnet, dass**
die Drähte der Schutzhülle aus Kupfer, einer Kupfer-Nickel- oder einer anderen Kupferlegierung oder aus einer Kombination davon bestehen.
